# EUROPEAN PATENT APPLICATION

(11) **EP 4 417 823 A1**
(43) Date of publication of application: **21.08.2024**
(21) Application number: 23382134.7
(22) Date of filing: 14.02.2023
(51) Int. Cl.: F16B 12/24

(54) **CONNECTOR FOR ATTACHING FURNITURE BOARDS**

(71) Applicant: Fundación Tecnalia Research & Innovation, 48160 Derio - Bizkaia (ES)
(72) Inventor: Abascal Muro, José Miguel, 48160 Derio (ES)
(74) Representative: Balder IP Law, S.L.

(57) **Abstract**

The invention relates to a connector for attaching two structural members together, such as two plate-shaped furniture components to be joined at right angles. The connector is an elongated body extending along an axis X between first and second ends and having a plurality of harpoons formed on its outer surface, wherein the harpoons are configured for engaging with an external surface in one axial direction. The connector comprises a first group of harpoons extending from the first end, such that the harpoons of this first group are oriented in a first axial direction, and a second group of harpoons extending from the second end, such that the harpoons of this second group are oriented in a second axial direction opposite to the first axial direction.

## Description

### TECHNICAL FIELD

This invention relates to a connector for attaching two structural members together, such as two plate-shaped furniture boards to be joined at right angles, for the manufacture of furniture.

### STATE OF THE ART

Fasteners or connectors are widely used in the furniture industry for connecting furniture panels, such as cabinet side walls, cabinet bottoms, cabinet tops, cabinet rear walls, etc. These connectors allow simple detachable connection of furniture components, making possible delivery of unassembled furniture with consequent savings in space and transportation expenses.

Known connectors typically include a pin or stud which is inserted in a prepared blind hole at the edge of a furniture panel, whereas other part of the connector is inserted into another blind hole prepared on a face of another furniture panel, so that the two panels are joined at right angles.

Even if these connectors have been used for many years, there is still room for improving their design so that they are more effective and versatile.

### DESCRIPTION OF THE INVENTION

The connector of the invention for attaching two furniture boards together, mainly wood-based boards such as plywood or fiberboard. The connector is an elongated body that extends along an axis X between first and second ends, and it has a plurality of harpoons formed on its outer surface, wherein these harpoons are surface engaging elements configured for engaging with an external surface to the connector, typically the surface of a bore opened in a board or panel to be attached to another board or panel.

The harpoons are configured to engage with an external surface to the connector, in only one axial direction, that is, the connector can be inserted into a bore by moving the connector in an axial direction, but it cannot be extracted out of the bore once it has been introduced in it (without damaging the board or panel).

Conventionally, each harpoon has frusto-conical configuration and is coaxially arranged about the axis X.

According to the invention, the connector has a first group of harpoons extending from the first end of the connector, and the harpoons of this first group are oriented in a first axial direction with respect to the axis X. Additionally, the connector has a second group of harpoons extending from the second end of the connector, and the harpoons of this second group are oriented in a second axial direction with respect to the axis X, which is opposite to the first axial direction. It could also be defined that the harpoons of the first and second groups of harpoons, are symmetrically arranged with respect to each other.

In a preferred embodiment, the connector is formed as a unitary body (one-piece component), and the innermost harpoons of both groups of harpoons, are in contact which each other, such that the entire outer surface of the connector is formed by harpoons. Preferably, the innermost harpoon of each group is radially wider than (larger diameter at the edge of the harpoon) than the rest of harpoons in each group.

In an alternative embodiment, the connector is also formed as a unitary body, and the outer surface of the connector has middle section in between the first and second groups of harpoons, such that in that middle section the outer surface of the connector is flat, that is, there are no harpoons in this middle section. In this embodiment, all the harpoons have the shape and dimension, that is, the same diameter.

In another preferred embodiment, the connector is formed by two detachable parts, namely a male part and a female part configured as a male-female coupling, such that the two parts are axially couplable. In this embodiment, one group of harpoons is formed in one of the parts, and the other group of harpoons is formed in the other part. The harpoons in one of the parts are oriented in a first axial direction with respect to the axis X, and the harpoons in the other part are oriented in a second axial direction with respect to the axis X, which is opposite to the first axial direction.

Preferably, the section of the male part having harpoons is longer or it has more harpoons, than the section of the female part having harpoons, so that the male part is meant to be inserted through an edge of a board, whereas the female part is meant to be inserted in a bore opened on a board's face.

The male part has a spigot axially insertable in the female part. This spigot has an annular abutment at its free end for engaging with the female part. Furthermore, the spigot is inwardly deformable so that male and female parts can engage and disengage upon deformation of the spigot, so that a detachable connection system is thereby realized. For example, the spigot may be formed by flexible walls that can flex inwardly.

The female part is a tubular body and the spigot is configured such that when the male part and a female part are engaged together, the abutment of the spigot protrudes outside the female part and engages with an end of the female part.

Preferably, the female part has internally an annular recess, and the spigot has an annular shoulder, both configured such that when the two parts are engaged together, the shoulder is in contact with the recess, and the female part is retained between the abutment and the shoulder.

The innermost harpoon of the male and female parts has larger diameter than the rest of harpoons in each part, wherein the diameter is taken at the edge of each harpoon. These innermost harpoons of both parts are in contact which each other when the male and female parts are engaged together.

Having the innermost harpoons with a larger diameter than the rest of harpoons, prevent the male part and the female part from being inserted too much into the machined hole in the board while being installed therein, allowing them to be positioned "flush" with the board surface.

In an alternative embodiment of the invention, the female part has an annular lip formed on its inner surface. In this embodiment, the spigot is shorter than the female part, and the abutment of the spigot is engageable with the lip upon axial coupling of the male and female parts. Preferably, in this embodiment of the connector, when the male and female parts are engaged together, it has a middle section in between the first section and the second groups of harpoons, in which its outer surface is flat, that is, there are no harpoons in this middle section.

In all of the above-described embodiments, preferably one group of harpoons has more harpoons than the other group, such that the section of the connector which has more harpoons is meant to be inserted into the edge of a board for improved grip, whereas the group with less number of harpoons is meant to be inserted in a board's face.

Furthermore, in all of the above embodiments, preferably, the connector has generally a cylindrical configuration and it is made from a plastic material.

Some of the main features and advantages of the invention are the followings:
- concealed connector;
- connector with a low economic cost;
- compatible with the equipment available on a conventional furniture manufacturing line;
- compatible with the work pace of a conventional furniture manufacturing line;
- no complex tools are required to assemble the furniture;
- no adhesives are required;
- specially designed for the furniture and contract sector.

### BRIEF DESCRIPTION OF THE DRAWINGS

To complete the description and in order to provide a better understanding of the invention, a set of drawings is provided. These drawings form an integral part of the description and illustrate embodiments of the invention, which should not be interpreted as restricting the scope of the invention, but just as examples of how the invention can be carried out. The drawings comprise the following figures:
Figure 1.- shows a first preferred embodiment of a connector according to the invention, wherein figure 1A is a perspective view; figure 1B is a side elevational view; figure 1C is perspective view with an installation utensil, and figure 1D is a longitudinal section of the connector of this embodiment joining two boards.
Figure 2.- shows another embodiment of the connector according to the invention, wherein figure 2A is a perspective view, and figure 2B is a side view section of the connector of this embodiment joining two boards.
Figure 3.- shows another embodiment of the connector according to the invention, wherein figure 3A is a perspective view of a male part, figure 3B is a perspective view of a female part; and figure 3C is a side view section of the connector with an installation utensil (12).
Figure 4.- shows the installation procedure of the connector of figure 3, wherein figures 4A and 4B are two perspective views, and figures 4C and 4 D are side view with the male and female parts shown in a longitudinal cross-section.
Figure 5.- shows another embodiment of the connector according to the invention, wherein figure 5A is a perspective view, and figure 5b is a side elevational view with the female part represented as transparent body to illustrate its connection with the male part.

### PREFERRED EMBODIMENTS OF THE INVENTION

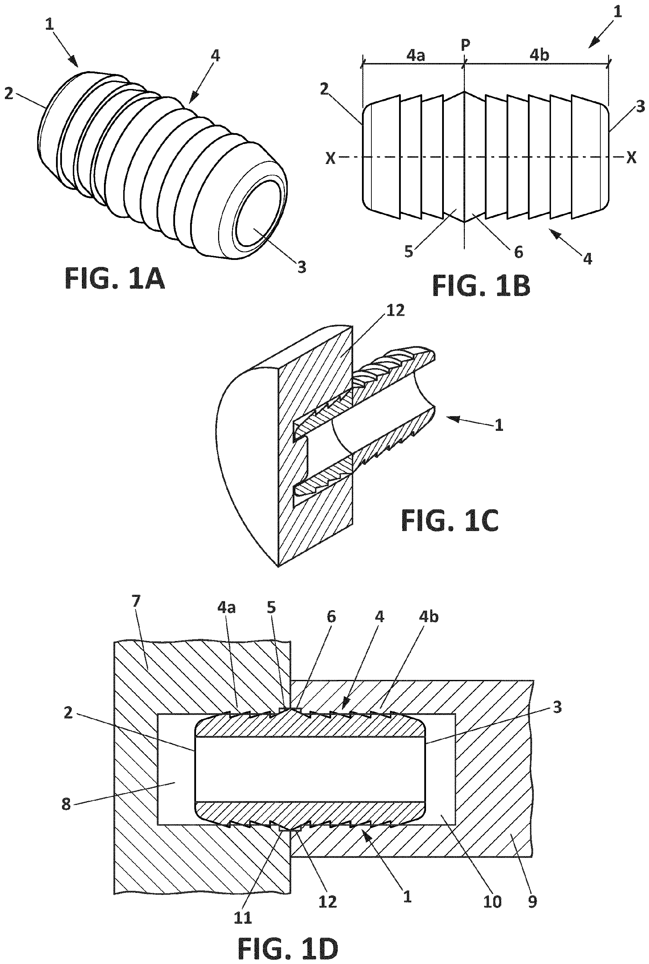

**Figures 1A** to **1D** shows a first preferred embodiment of a connector (1) according to the invention, which is a single-component piece, that is, an unitary body, having a cylindrical configuration. The connector (1) is an elongated and tubular body that extends along an axis (X) between a first end (2) and a second end (3), and it has a plurality of harpoons (4) formed on its outer surface. Each harpoon (4) has a frusto-conical configuration, and all the harpoons are coaxially arranged about the axis (X).

In this embodiment, the connector (1) has two groups of harpoons (4), namely a first group of harpoons (4a) that extends from the first end (2), and a second group (4b) of harpoons that extends from the second end (3). As shown especially in **Figure 1B****,** the harpoons of the first group (4a) are oriented in a first axial direction (towards the left-hand side of **Figure 1B**), and the harpoons of the second group (4b) are oriented in a second axial direction (towards the right-hand side of **Figure 1B**), opposite to the first axial direction. It could also be defined that the harpoons of the first and second groups (4a,4b) are symmetrically arranged with respect to a plane (P) orthogonal to the axis (X).

In this embodiment, innermost harpoons (5,6) of both groups of harpoons (4a,4b) respectively, are in contact which each other, and each of these innermost harpoons (5,6) is radially wider than the rest of harpoons in each group (4a,4b), that is, the diameter at the edge of these two harpoons is larger than the diameter of the edge of the rest of harpoons in each group.

In this embodiment, the entire outer surface of the connector (1) from the first end (2) to the second end (3), is formed by harpoons (4). The section of the connector having the second group (4b) of harpoons, is longer than the other section of the connector having the first group (4a) of harpoons.

The connector of the embodiment of **Figures 1A** to **1D****,** features a simple design and can be used when the joint between two boards does not need to be removable. The connector can be solid or hollow. As shown in **Figure 1D****,** the shorter section of the connector (1), is meant for its insertion into a bore (8) opened on a surface or face of a board (7), whereas the longer section, is meant for its insertion into a bore (10) opened in an edge of another board (9) for an enhanced engagement with that board (9).

The two sections meet at the point wherein the two innermost harpoons (5,6) are in contact, and since these two harpoons are wider than the rest, they form an abutment of the connector to delimit its insertion in the bores (8,9), as represented in **Figure 1D****.**

The installation of the connector (1) for joining two boards (7,9) together is very simple, the longer section of the connector (1) is first inserted into a bore (10) in the edge of a board (9), for example using a utensil (12) as shown in **Figure 1C** and hitting the utensil (12) with a rubber hammer, and then the other board (7) is applied to the connector such the shorter section is inserted into the hole (8).

It is necessary that the two bores (8,10) are formed with an annular counter shanks (11,12) respectively, to accommodate the innermost harpoons (5,6), so that these harpoons (5,6) are "flush" with the surface of the boards.

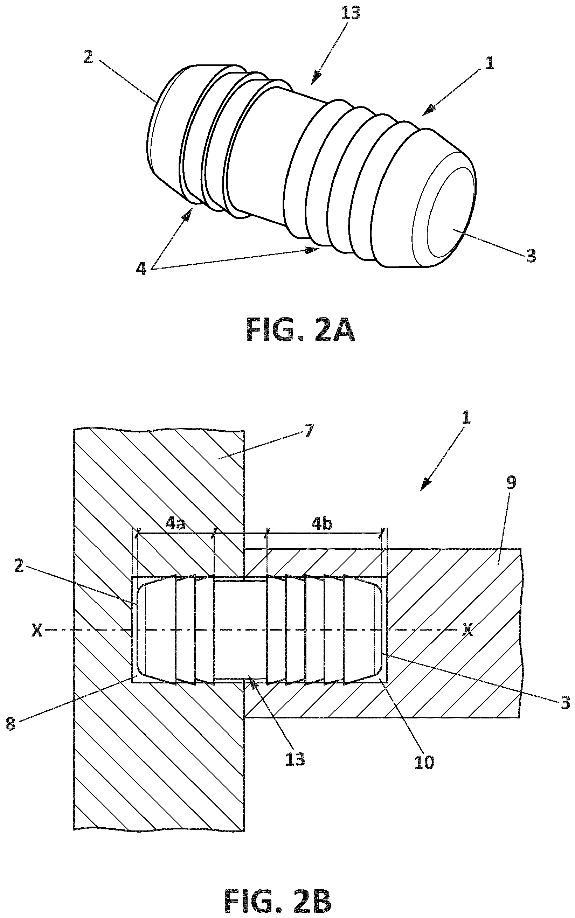

**Figures 2A, 2B** shows another preferred embodiment of a connector (1) according to the invention, which is also a single-component piece or unitary body, having a cylindrical configuration. The connector of this embodiment can be solid or hollow. The connector (1) is also an elongated body that extends along an axis (X) between a first end (2) and a second end (3), and it has a plurality of harpoons (4) formed on its outer surface.

Furthermore, the connector (1) has a middle section (13) in which the outer surface of the connector is flat, that is, there are no harpoons in this middle section. The middle section (13) is formed in between the first section of the connector having the first group (4a) of harpoons, and the second section of the connector having the second group (4b) of harpoons.

Also in the first embodiment, the second section of the connector is longer than the first one, and the harpoons of the first and second groups (4a,4b) are also oriented in opposite axial directions.

The connector of the embodiment of **Figures 2A, 2B** can be used to joint two boards that do not need to be removable, and it is capable of absorbing errors in the depth of the boreholes without the need for a larger diameter harpoon to prevent it from being inserted too far into the borehole. Assuming that there are always small deviations in the depth of the holes, this connector can be inserted deeper or shallower into the holes, "absorbing" those precision errors in the depth of the boreholes.

Assuming that there will always be minimal deviations in the hole depth of ± 1-2 mm, for its installation we simply drill holes in the boards with a depth slightly greater than the length of the connector, so that in the event that the holes are slightly shallower than the previously defined length, the connector can still be fitted without problems. And if the holes are slightly longer, there will not be problems either.

To install this connector, it is inserted into one of the boards and then the other board is attached. As the "gripping" is done by the harpoons (when inserted into the face of the board and when inserted into the edge of the board), as long as the harpoons are in perfect contact inside the board, there is no problem if one of the holes is deeper or shallower.

An advantage of the embodiment of **Figures 2A, 2B****,** is that it does not require to make a countersunk around the borehole in the board.

The connector (1) of the embodiments of **Figures 1A - 1D** and **Figures 2A, 2B****,** is preferably made of a plastic or a metallic material, or it could also be made of wood.

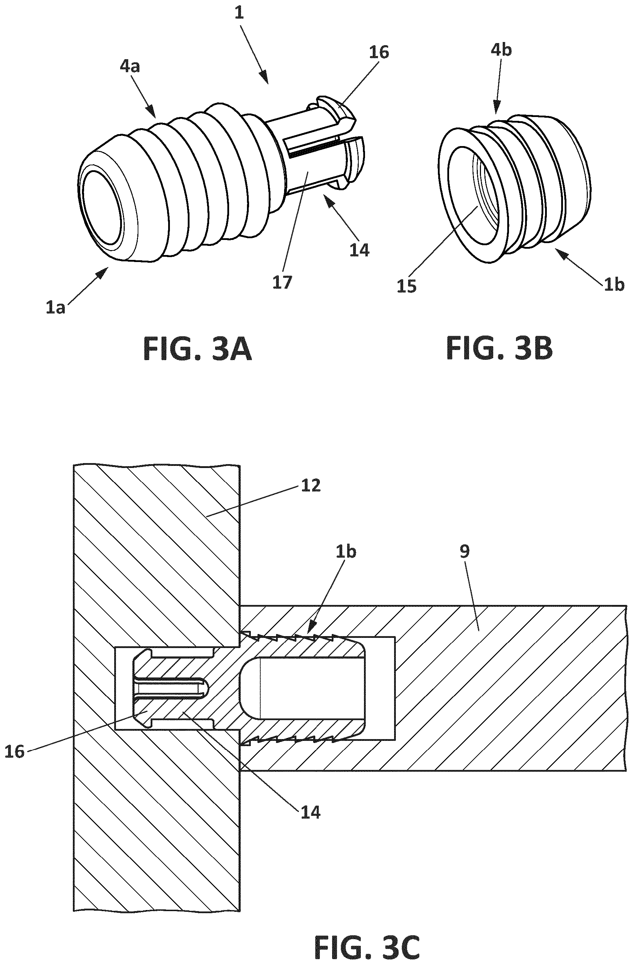

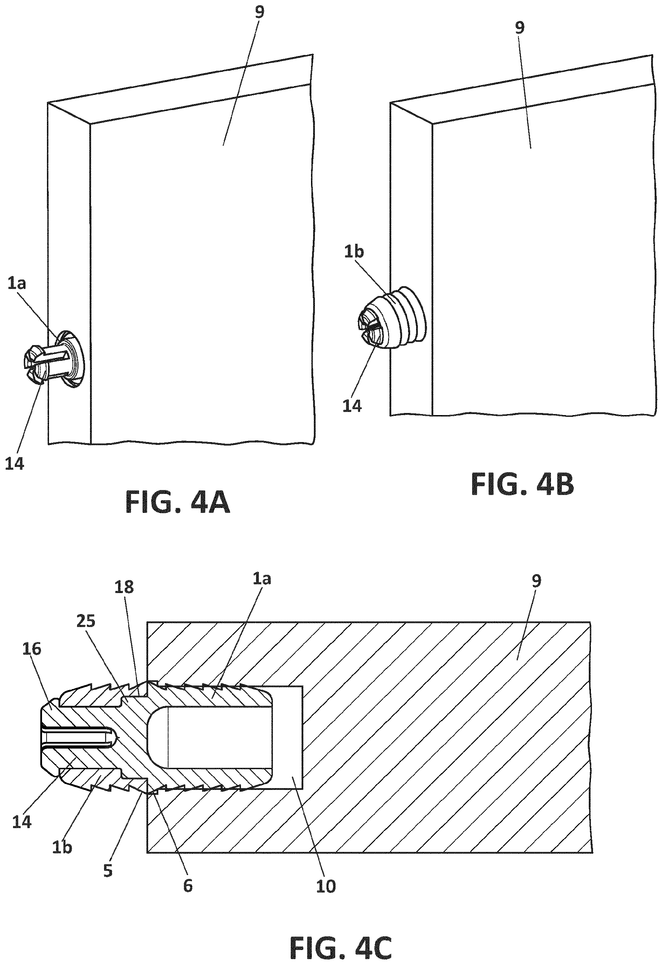

**Figures 3A - 3C** **&** **4A** - **4D****,** shows another embodiment of a connector (1) in this case featuring a detachable function. The connector (1) is formed by a male part (1a) and a female part (1b) configured as a male-female coupling, such that the two parts (1a,1b) are axially couplable. One group (4a) of harpoons is formed in the male part (1a), and the other group (4b) of harpoons is formed in the female part (4b), such that the harpoons of the first and second groups (4a,4b) are oriented in opposite axial directions.

The male part (1a) has a spigot (14) axially insertable in a cavity (15) formed internally in the female part (1b). The spigot (14) has an annular abutment (16) at its free end for engaging with the female part (1b), and it is inwardly deformable so that the two parts (1a, 1b) can be engaged and disengaged upon deformation of the spigot (14). The deformable feature of the spigot (14) in this embodiment, is realized by forming the spigot (14) with several walls (17) that can bent or flex inwardly when they are pressed and recover the original form when pressure is released.

In turn, the female part (1b) is a tubular body, and the spigot (14) is configured such that when the male and female parts (1a,1b) are engaged together, the abutment (16) of the spigot (14) protrudes outside the female part and engages with an end of the female part (1b), as shown for instance in **Figure 4C****.**

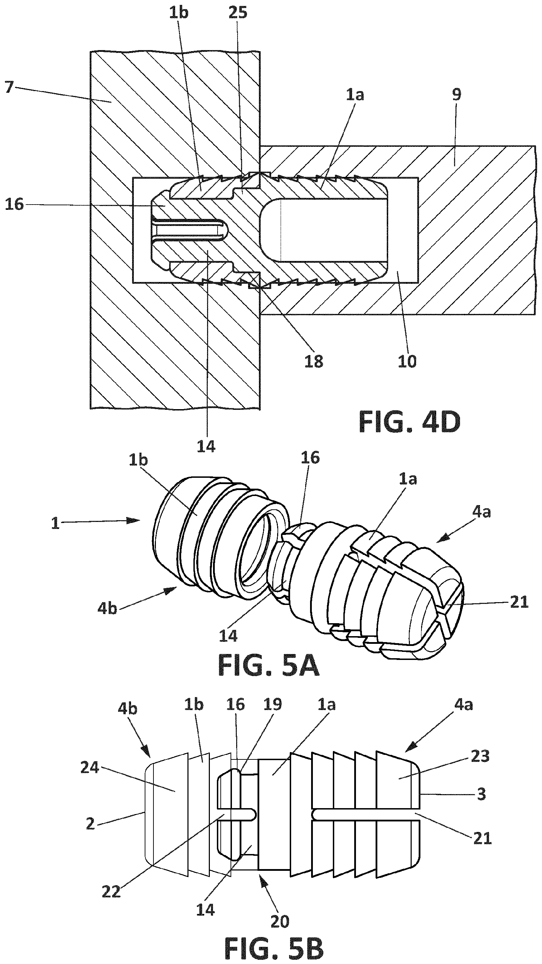

Preferably, as shown in **Figures 4C** & **4D****,** the female part (1b) has an annular recess (18) and the spigot (14) has an annular shoulder (25), the recess and the shoulder being configured such that when the two parts (1a, 1b) are engaged together, the shoulder (25) is in contact with the recess (18) and the female part (1b) is retained between the abutment (16) and the shoulder (25).

Similarly, to the embodiment of **Figures 1A** to **1D****,** the innermost harpoons (5,6) of each group of harpoons (4a,4b) are wider, that is, they have larger diameter than the rest of harpoons in each group, and these two innermost harpoons (5,6) are in contact which each other when male and female parts (1a,1b) are engaged together.

Optionally, in the embodiments of **Figures 1A to 1D****,** **2A, 2B****,** a part of the connector could be provided with longitudinal cut outs as the cut outs (21) of the embodiment of **Figure 5A** - **5B****.** Similarly, in the embodiment of **Figure 3A** - **3C****,** the male part (1a) and/or the female part (1b), could be provided with longitudinal cut outs as the cut outs (21) of the embodiment of **Figure 5A** - **5B****,** longitudinally extending through the harpoons, so that the resulting walls can flex inwardly.

**Figures 5A, 5B** shows another embodiment of a detachable connector (1), also formed by a male part (1a) and a female part (1b) configured as a male-female coupling, wherein the two parts (1a,1b) are axially couplable. One group (4a) of harpoons is formed in the male part (1a), and the other group (4b) of harpoons is formed in the female part (1b), such that the harpoons of the first and second groups (4a,4b) are oriented in opposite axial directions.

In this embodiment, the female part (1b) has an annular lip (19) formed internally on its inner surface, in a way that the abutment (16) of the spigot (14) is engageable with the lip (19) upon axial coupling of the male and female parts (1a,1b). In this embodiment, the spigot (14) is shorter than the female part (1b).

Additionally, the connector (1) has a middle section (20) in between a first section of the connector having the first group of harpoons (4a) and a second section of the connector having the second group of harpoons (4b), such that in this middle section (20) the outer surface of the connector is flat, that is, there are no harpoons in this middle section (20).

The male part (1a) could have longitudinal cut outs (21) longitudinally extending through the harpoons, so that the resulting walls in this section of the connector can flex inwardly. The spigot (14) could also has longitudinal cut outs (22) so that it can be deformed inwardly.

The connector (1) of **Figures 5A, 5B** combines the advantages of the connectors of **Figures 2A, 2B****,** and **Figures 3A** - **3C****,** as it allows a detachable connection between male and female parts, and additionally enabling absorption of errors in the depth of the bore holes without the need for a larger diameter harpoons.

The configuration of the male part (1a) allows it to be inserted into female part (1b) achieving a fairly strong connection, but, allowing that when enough pressure is applied to it, the male part can be disengaged from the female part.

In this embodiment, the installation is very simple as it only requires joining by hand male and female parts together, and installing the connector into the boards in the same way as previously described for the embodiment of **Figures 2A, 2B****.**

Furthermore, in the embodiment of **Figures 5A, 5B****,** the outermost harpoons (23,24) respectively of the male and female parts (1a, 1b), are axially longer than the rest of harpoons, so these larger harpoons would be inserted first in the edge of the board, would allow for a slight deformation during insertion, so that the connector can be inserted into holes with a slightly smaller diameter. Additionally, these larger harpoons (23,24) achieve better grip with on certain types of boards made of less dense material (e.g. chipboard) and it is necessary for the connector to fit more "tightly" into the hole.

Even if all the embodiments shown in the drawings, the section of the connector with the first group of harpoons (4a) and the section of the connector with the second group of harpoons (4b), both have generally the same diameter, in other embodiments of the invention one of these sections is wide than the other.

Conventionally, the connector in all the above-described embodiments, is preferably made of a plastic material.

Other preferred embodiments of the invention are described in the attached claims and the combination thereof.

## Claims

1. Connector (1) for attaching two furniture boards (7,9) together,
wherein the connector (1) is an elongated body extending along an axis (X) between first and second ends (2,3), and having a plurality of harpoons (4) formed on its outer surface, wherein the harpoons (4) are configured for engaging with an external surface,
wherein the connector (1) comprises:
a first group (4a) of harpoons extending from the first end (2), such that the harpoons of this first group (4a) are oriented in a first axial direction, and
a second group (4b) of harpoons extending from the second end (3), such that the harpoons of this second group (4b) are oriented in a second axial direction which opposite to the first axial direction.

2. Connector according to claim 1, wherein the innermost harpoons (5,6) of both groups of harpoons (4a,4b) are in contact which each other, such that the entire outer surface of the connector (1) is formed by harpoons (4).

3. Connector according to claim 2 wherein the innermost harpoons (5,6) of each group of harpoons (4a,4b), are radially wider than the rest of harpoons in each group of harpoons (4a,4b).

4. Connector according to claim 1, having a middle section (13) in between the first group and the second group (4a,4b) of harpoons, in which the outer surface of the connector is flat.

5. Connector according to any of the preceding claims, formed as a unitary body, hollow or solid, and preferably made of a plastic or a metallic material, or it could also be made of wood.

6. Connector according to claim 1, formed by a male part (1a) and a female part (1b) configured as a male-female coupling, such that the two parts (1a, 1b) are axially couplable, and wherein the first group (4a) of harpoons is formed in the male part (1a), and the second group of harpoons (4b) is formed in the female part (1b).

7. Connector according to claim 6, wherein the male part (1a) has a spigot (14) axially insertable in the female part (1b), wherein the spigot (14) has an annular abutment (16) at its free end for engaging with the female part (1b), and wherein the spigot (14) is inwardly deformable so that the two parts (1a,1b) can be engaged and disengaged upon deformation of the spigot (14).

8. Connector according to claim 7, wherein the female part (1b) is a tubular body, and wherein the spigot (14) is configured such that when the male part and a female part (1a,1b) are engaged together, the abutment (16) of the spigot (14) protrudes outside the female part and engages with an end of the female part (1b).

9. Connector according to claim 8, wherein the female part (1b) has an annular recess (18), and the spigot (14) has an annular shoulder (25), the recess and the shoulder being configured such that when the two parts (1a, 1b) are engaged together, the shoulder (25) is in contact with the recess (18) and the female part (1b) is retained between the abutment (16) and the shoulder (25).

10. Connector according to claim 8 or 9 wherein the innermost harpoon (5,6) of each group (4a,4b) has a larger diameter than the rest of harpoons in each section, and wherein the innermost harpoons of both groups are in contact which each other when the male and female parts (1a,1b) are engaged together.

11. Connector according to claim 7, wherein the female part (1b) has an annular lip (19) formed on its inner surface, and wherein the abutment (16) of the spigot (14) is engageable with the lip (19) upon axial coupling of the male and female parts (1a,1b), and wherein the spigot (14) is shorter than the female part (1b).

12. Connector according to claim 11, configured such that when the male and female parts (1a, 1b) are engaged together, the connector has a middle section (20) in between the first section and the second groups of harpoons (4a,4b), in which its outer surface is flat.

13. Connector according to any of the preceding claims, wherein each harpoon (4) has a frusto-conical configuration, and it is coaxially arranged about the axis X.

14. Connector according to any of the preceding claims, wherein one group of harpoons (4a,4b) has more harpoons than the other group.

15. Connector according to any of the preceding claims, wherein at least a part of the connector provided with longitudinal cut outs longitudinally extending through the harpoons, so that the resulting walls can flex inwardly.
